(19) Europäisches Patentamt

European Patent Office

Office européen des brevets

(11) EP 4 503 708 A1

(12) EUROPEAN PATENT APPLICATION

(43) Date of publication:
05.02.2025 Bulletin 2025/06

(51) International Patent Classification (IPC):
H04W 24/02 $^{(2009.01)}$    H04W 24/10 $^{(2009.01)}$
H04W 36/36 $^{(2009.01)}$

(21) Application number: 24191771.5

(22) Date of filing: 30.07.2024

(52) Cooperative Patent Classification (CPC):
H04W 36/362; H04W 24/02; H04W 24/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.08.2023 IN 202341052368

(71) Applicant: SAMSUNG ELECTRONICS CO., LTD.
Yeongtong-gu
Suwon-si, Gyeonggi-do 16677 (KR)

(72) Inventors:
• MADHURANTAKAM, Shrinath Ramamoorthy
560048 Bengaluru (IN)
• SUNDARARAJU, Sathia Chandrane
560048 Bengaluru (IN)
• RAJENDRAN, Deepak
560048 Bengaluru (IN)

(74) Representative: Marks & Clerk LLP
15 Fetter Lane
London EC4A 1BW (GB)

(54) SYSTEMS AND METHODS FOR OPTIMIZING SIMULTANEOUS CONDITIONAL RECONFIGURATION OF PCELL AND PSCELL

(57) A method for optimizing simultaneous conditional reconfiguration of a primary cell (PCell) and a primary secondary cell (PSCell) for a user equipment (UE), includes: receiving, from a base station, a radio resource control (RRC) reconfiguration message comprising a conditional handover (CHO) command and a conditional PSCell addition or change (CPAC) command for performing a reconfiguration of the PCell and a reconfiguration of the PSCell, simultaneously, wherein the CHO command comprises one or more first conditions to trigger the reconfiguration of the PCell, and wherein the CPAC command comprises one or more second conditions to trigger the reconfiguration of the PSCell; storing one or more reports capturing one or more metrics related to the simultaneous conditional reconfiguration of the PCell and the PSCell upon receiving the RRC reconfiguration message; and transmitting, to the base station, the one or more reports for optimizing the one or more first conditions and the one or more second conditions.

FIG. 2

**Description**

BACKGROUND

1. Field

The disclosure relates to a wireless communication system. More particularly, the disclosure relates to systems and methods for optimizing simultaneous conditional reconfiguration of a primary cell (PCell) and a primary secondary cell (PSCell) for a user equipment (UE) in the wireless communication system.

2. Description of Related Art

In the 3rd Generation Partnership Project (3GPP) Release 16, as part of the new radio (NR) mobility enhancements work item, a 'conditional handover (CHO)' feature (in short, "CHO") was introduced to enhance handover robustness and reduce handover failures in cell edge scenarios. CHO applies to both long-term evolution (LTE) network and NR network. With CHO, a network provides multiple candidate cells for handover to a user equipment (UE) connected to the network, which then selects the best primary cell (PCell) for the handover.

In 3GPP Release 17, 'Conditional PSCell Change' (CPC) and 'Conditional PSCell Addition' (CPA) were introduced. These features allow multiple candidate primary secondary cells (PSCells) to be provided to the UE, which then selects the best PSCell. However, CHO and CPA/CPC cannot be configured simultaneously, limiting the effectiveness of these features.

As per 3GPP Release 18, the network configures both the CHO and the CPA/CPC configuration details in the same conditional reconfiguration message to the UE. The UE may apply the conditional reconfiguration only when both the CHO and the CPA/CPC trigger conditions are satisfied. During the waiting period for both target CHO and Conditional PSCell Addition and Change (CPAC) cells to meet the criteria, different successful and failure events and timings may occur. During this procedure, the UE may record multiple Self-organizing networks (SON)/Minimization of Drive Test (MDT) parameters and share them with the network in a UEInformationResponse message.

Self-organizing networks (SON), incorporating solutions for network self-configuration and self-optimization, were introduced in long-term evolution (LTE) to support system deployment and performance optimization. Mobility Robustness Optimization (MRO) dynamically enhances handover (HO) performance, thereby improving user experience and increasing network capacity. The enhanced HO performance is achieved by automatically adjusting cell parameters to refine handover boundaries based on performance indicators. The aim is to eliminate Radio Link Failures (RLF) and reduce unnecessary handovers. Incorrect handover parameter settings may negatively impact user experience and waste network resources by causing handover ping-pongs, handover failures, and RLFs. Although handover failures (that do not lead to RLFs) are often recoverable and unnoticed by the user, RLFs (due to incorrect HO parameter settings) affect both of user experience and network resources. Therefore, the primary objective of MRO is to minimize HO-related RLFs. Additionally, sub-optimal HO parameter configurations may degrade service performance, even if these sub-optimal HO parameter configurations do not result in RLFs. For instance, incorrect HO hysteresis settings may lead to ping-pongs or excessively delayed handovers to a target cell. Consequently, the secondary objective of MRO is to reduce inefficient network resource use caused by unnecessary or missed handovers.

Minimization of Drive Test (MDT) is a 3GPP mechanism that allows operators to use user equipment (UE) in a network to collect mobile network field data (including radio measurements and location information). MDT reduces the need for traditional drive tests, which are costly, time-consuming, and provide only a partial network view limited to areas accessible by vehicle.

3GPP-release 16 has introduced the following CHO features:

    1) UE receives "ConditionalReconfiguration" with a list of CHO target cells and their associated HO trigger events.
    2) UE performs an evaluation of the CHO target cells.
    3) UE executes conditional handover on the target cell which could meet trigger criteria first.

Accordingly, the SON-MDT report includes the following fields:

- lastHO-Type: the CHO parameters for the HO to CHO target cell might be different than the ordinary HO parameters for the same target cell. Hence, the network uses this information to tune the CHO or the HO parameters accordingly, depending on whether the last HO was a CHO or ordinary HO.
- timeBetweenEvents: This field is used for constructing a timeline of the dual event evaluation.
- timeSinceCHO-Reconfig: The timer "timeSinceCHO-Reconfig" may be included in the RLF report in two cases. One is when CHO execution occurs, timeSinceCHO-Reconfig represents the time elapsed from receiving the CHO configuration to the CHO execution. Another is when RLF occurs at the source link before CHO execution, timeSinceCHO-Reconfig represents the time elapsed from CHO configuration to RLF at the source link.
- firstTriggeredEvent: This field is used to indicate the first triggered events if two execution conditions are configured.

- choCellId: This field is used to indicate the selected CHO cell after the first connection failure and before the reestablishment.
- choCandidate: This field indicates whether the associated cell is a candidate target cell for conditional handover.

3GPP Release-17 introduced the following CPA/CPC features:

- A Conditional PSCell Addition (CPA) is defined as a PSCell addition that is executed by the UE when execution condition(s) is met.
- A Conditional PSCell Change (CPC) is defined as a PSCell change that is executed by the UE when execution condition(s) is met.
- The UE starts evaluating the execution condition(s) upon receiving the CPA/CPC configuration and stops evaluating the execution condition(s) once PSCell addition/change or PCell change is triggered.
- The CPA/CPC execution condition may consist of one or two trigger condition(s)
- Once the CPA/CPC procedure is executed successfully, the UE releases all stored conditional reconfigurations.

Accordingly, the SON-MDT report includes the following fields:

- successPSCell-Report (SPR): This field is used to provide the successful PSCell change or addition report is triggered based on the successful change or addition report configuration
- choCandidate: This field is added in SPR like in a Successful Handover Report (SHR), Information Element (IE) name and purpose are the same but the container carrying it is different (successPSCell-Report).
- successPSCell-Config-r18: This field is a configuration for the UE to report the successful PSCell change or addition information to the network. Like SuccessHOConfig-r17 (which allows reporting of successful handover), percentage-based threshold variables are used.
- firstTriggeredEvent, timeBetweenEvents: In the scope of MRO for CPC and CPA, if there are multiple events configured for CPA/CPC, it is beneficial if the UE reports:-the type of the first triggered CPAC event, and the time duration between the two triggered CPAC events.
- timeSinceCPAC-Reconfig: This is similar to timeSinceCHO-Reconfig as discussed in respect of CHO features.

Therefore, there is a need to determine the various events and timings related to simultaneous CHO and CPAC to report to the network for tuning and optimization.

SUMMARY

This summary is provided to introduce a selection of features, in a simplified format, that are further described in the detailed description of the disclosure. This summary is neither intended to identify key or essential inventive concepts of the disclosure and nor is it intended for determining the scope of the disclosure.

According to an aspect of the disclosure, a method for optimizing simultaneous conditional reconfiguration of a primary cell (PCell) and a primary secondary cell (PSCell) for a user equipment (UE), includes: receiving, from a base station, a radio resource control (RRC) reconfiguration message comprising a conditional handover (CHO) command and a conditional PSCell addition or change (CPAC) command for performing a reconfiguration of the PCell and a reconfiguration of the PSCell, simultaneously, wherein the CHO command comprises one or more first conditions to trigger the reconfiguration of the PCell, and wherein the CPAC command comprises one or more second conditions to trigger the reconfiguration of the PSCell; storing one or more reports capturing one or more metrics related to the simultaneous conditional reconfiguration of the PCell and the PSCell upon receiving the RRC reconfiguration message; and transmitting, to the base station, the one or more reports for optimizing the one or more first conditions and the one or more second conditions.

According to an aspect of the disclosure, an electronic device for optimizing simultaneous conditional reconfiguration of a primary cell (PCell) and a primary secondary cell (PSCell) for a user equipment (UE), includes: a memory; and a processor operatively coupled to the memory and configured to: receive, from a base station, a radio resource control (RRC) reconfiguration message having a conditional handover (CHO) command and a conditional PSCell addition or change (CPAC) command for performing a reconfiguration of the PCell and a reconfiguration of the PSCell, simultaneously, wherein the CHO command comprises one or more first conditions to trigger the reconfiguration of the PCell, and wherein the CPAC command comprises one or more second conditions to trigger the reconfiguration of the PSCell; store one or more reports capturing one or more metrics related to the simultaneous conditional reconfiguration of the PCell and the PSCell upon receiving the RRC reconfiguration message; and transmit, to the base station, the one or more reports for optimizing the one or more first conditions and the one or more second conditions.

At least some of the above and other features of the invention are set out in the claims.

To further clarify the advantages and features of the disclosure, a more particular description of the disclosure will be rendered by reference to specific embodiments thereof, which is illustrated in the appended drawings. It is appreciated that these drawings depict only typical embodiments of the disclosure and are therefore not to be considered limiting of its scope. The disclosure will be described and explained with additional specificity and detail with the accompanying drawings.

BRIEF DESCRIPTION OF DRAWINGS

These and other features, aspects, and advantages of the disclosure will become better understood when the following detailed description is read with reference to the accompanying drawings in which like characters represent like parts throughout the drawings, wherein:

FIG. 1 illustrates an example of a wireless communications system that supports optimizing simultaneous conditional reconfiguration of a primary cell (PCell) and a primary secondary cell (PSCell), in accordance with an embodiment of the disclosure;

FIG. 2 illustrates a flow diagram depicting a method for optimizing simultaneous conditional reconfiguration of the PCell and the PSCell for a user equipment (UE), in accordance with an embodiment of the disclosure;

FIGS. 3-11 illustrate timing diagrams related to the one or more metrics, in accordance with an embodiment of the disclosure;

FIG. 12 illustrates a signal flow diagram depicting a successful conditional handover, in accordance with an embodiment of the disclosure;

FIG. 13 illustrates a signal flow diagram depicting a source link failure between the UE and the base station, in accordance with an embodiment of the disclosure; and

FIG. 14 illustrates a block diagram of a system for simultaneous conditional reconfiguration of the PCell and the PSCell for the UE, in accordance with an embodiment of the disclosure.

Further, skilled artisans will appreciate that elements in the drawings are illustrated for simplicity and may not have necessarily been drawn to scale. For example, the flow charts illustrate the method in terms of the most prominent operations involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

DETAILED DESCRIPTION

For the purpose of promoting an understanding of the principles of the disclosure, reference will now be made to the embodiment illustrated in the drawings and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of operations does not include only those operations but may include other operations not expressly listed or inherent to such process or method. Similarly, one or more systems or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below may be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. A non-transitory computer readable medium includes media where data may be permanently stored and media where data may be stored and later overwritten, such as a rewritable optical disc or an erasable memory device.

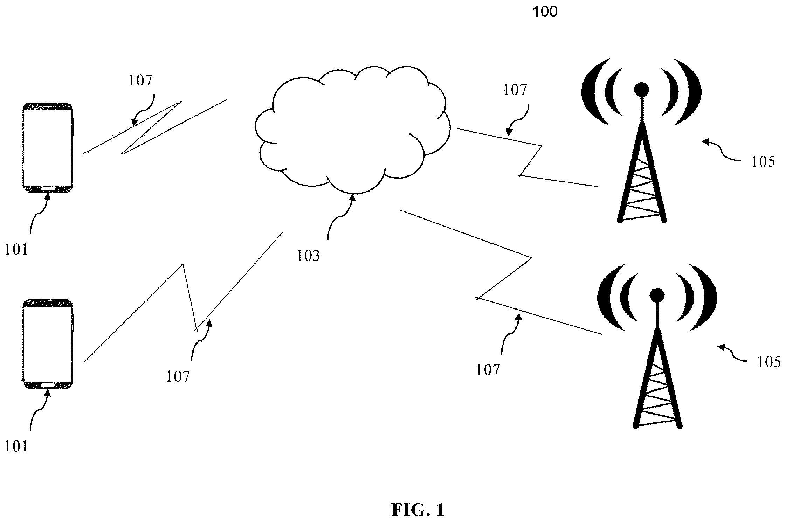

FIG. 1 illustrates an example of a wireless communications system that supports optimizing simultaneous conditional reconfiguration of a primary cell (PCell) and a primary secondary cell (PSCell), in accordance with an embodiment of the disclosure. The wireless communications system 100 may include one or more base stations 105, one or more UEs 101, and a core network 103. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission-critical) communications, low latency communications, communications with low-cost and low-complexity devices, or any combination thereof.

The one or more base stations 105 may be dispersed throughout a geographic area to form the wireless communications system 100 and may be devices in different forms or having different capabilities. The one or more base stations 105 and the one or more UEs 101 may wirelessly communicate via one or more communication links 107. Each base station 105 may provide a coverage area over which the one or more UEs 101 and the base station 105 may establish one or more communication links 107. The coverage area may be an example of a geographic area over which one of the base station 105 and one of the UE 101 may support the communication of signals according to one or more radio access technologies. The coverage area may include a primary cell (PCell) belonging to a master cell group (MCG) to which one of the UEs 101 is connected, and a primary secondary cell (PSCell) belonging to a secondary cell group (SCG) to which the same UE 101 may be connected.

The one or more UEs 101 may be dispersed throughout the coverage area of the wireless communications system 100, and each UE 101 may be stationary, mobile, or both at different times. The one or more UEs 101 may be devices in different forms or having different capabilities.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a gNodeB (either of which may be referred to as a gNB), a Home NodeB, a Home eNodeB, or other suitable terminology.

The one or more UEs 101 may include or may be referred to as a mobile device, a wireless device, a remote device, a handheld device, a subscriber device, or some other suitable terminology, where the "device" may also be referred to as a unit, a station, a terminal, or a client, among other examples. The one or more UEs 101 may also include or may be referred to as a personal electronic device, such as a cellular phone, a personal digital assistant (PDA), a tablet computer, a laptop computer, or a personal computer. In some examples, the one or more UEs 101 may include or be referred to as a wireless local loop (WLL) station, an Internet of Things (IoT) device, an Internet of Everything (IoE) device, or a machine-type communications (MTC) device, among other examples, which may be implemented in various objects such as appliances, or vehicles, meters, among other examples.

The one or more UEs 101 described herein may be able to communicate with various types of devices, such as other UEs 101 that may sometimes act as relays as well as the base stations 105 and the network equipment including macro eNBs or gNBs, small cell eNBs or gNBs, or relay base stations, among other examples, as shown in FIG. 1.

Further, it should be noted that although only two UEs 101 and two base stations 105 are depicted in FIG. 1 for illustration purposes, the wireless communication system 100 may include additional UEs and base stations not shown in FIG. 1.

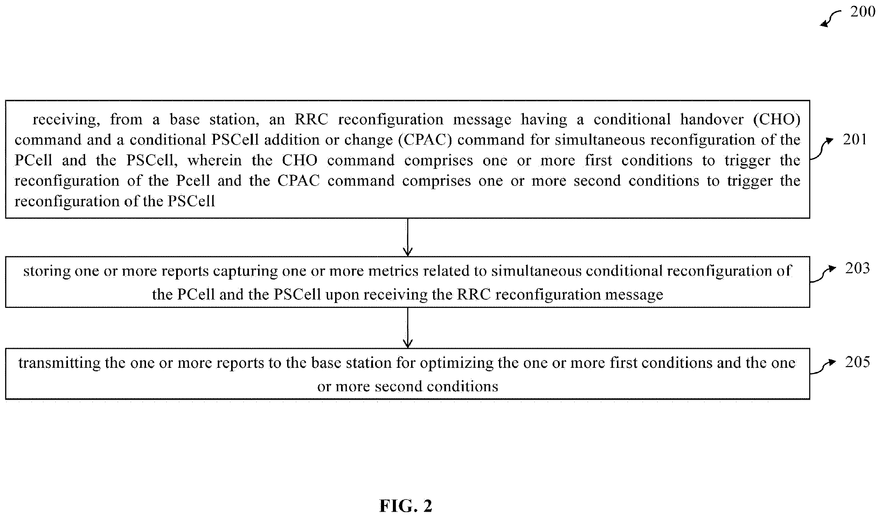

FIG. 2 illustrates a method 200 (operations) for optimizing simultaneous conditional reconfiguration of the PCell and the PSCell for a UE, in accordance with an embodiment of the disclosure. In an embodiment, FIG. 2 has been explained in conjunction with FIG. 1.

As shown in FIG. 2, at operation 201, the method 200 includes receiving, from the base station 105, a radio resource control (RRC) reconfiguration message having a conditional handover (CHO) command and a conditional PSCell addition or change (CPAC) command for simultaneous reconfiguration of the PCell and the PSCell. In an embodiment, the CHO command comprises one or more first conditions to trigger the reconfiguration of the PCell and the CPAC command comprises one or more second conditions to trigger the reconfiguration of the PSCell. In an embodiment, the one or more first and second conditions may include A3 event, A5 event, and similar events. Event A3 may be triggered when a neighbor cell has a signal strength (e.g. Reference Signal Received Power (RSRP)) that is greater than that of a special cell (SpCell) by an offset. A special cell may be the primary serving cell of either the Master Cell Group (MCG) or Secondary Cell Group (SCG)). The offset can be either positive or negative. Event A5 may be triggered when the signal strength (e.g. RSRP) of a special cell becomes less than a first threshold, and the signal strength (e.g. RSRP) of a neighboring cell becomes greater than a second threshold. The second threshold may be greater than the first threshold. If there are multiple candidate PSCells associated with one candidate PCell, the base station 105 may provide multiple CHO configurations for the same candidate PCell, i.e., each one contains one MCG configuration (for the same candidate PCell) and one SCG configuration (for different candidate PSCells).

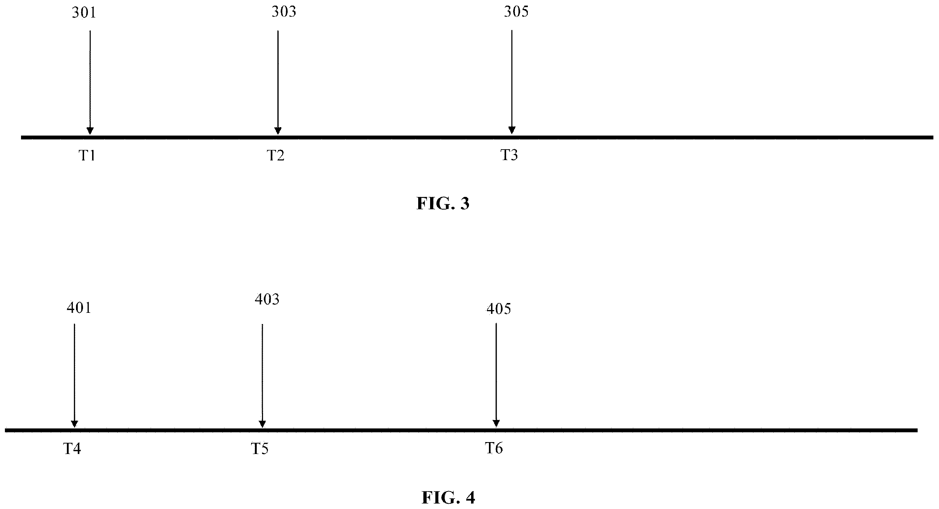

At operation 203, the method 200 includes storing one or more reports capturing one or more metrics related to simultaneous conditional reconfiguration of the PCell and the PSCell upon receiving the RRC reconfiguration message. In an embodiment, the UE 101 may determine if the one or more first and second conditions are satisfied and accordingly may store the one or more reports capturing these events. The one or more metrics are further explained in reference to FIGS. 3-11.

At operation 205, the method 200 includes transmitting the one or more reports to the base station for optimizing the one or more first conditions and the one or more second conditions. The optimization of the one or more first and second conditions metrics are further explained with reference to FIGS. 3-11. In an embodiment, the UE 101 may transmit the one or more reports to the base station 105 in successPSCell-Report (SPR)/Successful Handover Report (SHR). In another embodiment, the UE 101 may transmit the one or more reports to the base station 105 in RRC UE Information response. In another embodiment, the UE 101 may transmit the one or more reports to the base station 105 in a source link failure report.

FIGS. 3-11 illustrate timing diagrams related to the one or more metrics, in accordance with an embodiment of the present embodiment. In an embodiment, one of the one or more reports includes a time metric indicating an elapsed time between satisfaction of the one or more first conditions for execution of the CHO command and satisfaction of the one or more second conditions for execution of the CPAC command, as shown in FIG. 3.

As shown in FIG. 3, at time instance 301 (timestamp T1), the UE 101 receives configuration for simultaneous execution of the CHO and CPAC commands.

At time instance 303 (timestamp T2), the one or more first conditions are satisfied for execution of the CHO command.

At time instance 305 (timestamp T3), the one or more second conditions are satisfied for execution of the CPAC command. Then, the UE 101 simultaneously executes the CHO command and the CPAC command. Accordingly, the elapsed time may be calculated based on the difference between timestamps T3 and T2, i.e.,

$$\text{elapsed time} = \text{T3-T2} \ ....(1)$$

This time metric may help the base station 105 to optimize/tune the one or more second conditions so that the elapsed time may be minimized. In an embodiment, the base station 105 may optimize the one or more second conditions in accordance with techniques known to a person skilled in the art.

In an alternate embodiment, one of the one or more reports includes a time metric indicating an elapsed time between satisfaction of the one or more second conditions for execution of the CPAC command and satisfaction of the one or more first conditions for execution of the CHO command, as shown in FIG. 4.

As shown in FIG. 4, at time instance 401 (timestamp T4), the UE 101 receives configuration for simultaneous execution of the CHO command and CPAC command.

At time instance 403 (timestamp T5), the one or more second conditions for execution of the CPAC command is satisfied.

Further, at time instance 405 (timestamp T6), the one or more first conditions for execution of the CHO command are satisfied. Then, the UE 101 simultaneously executes the CHO command and the CPAC command. Accordingly, the elapsed time may be calculated based on the difference between timestamps T6 and T5, i.e., elapsed time = T6-T5....(2)

This time metric may help the base station 105 to optimize/tune the one or more first conditions so that elapsed time between the satisfaction of the one or more first and second conditions may be minimized. In an embodiment, the base station 105 may optimize the one or more first conditions in accordance with techniques known to a person skilled in the art.

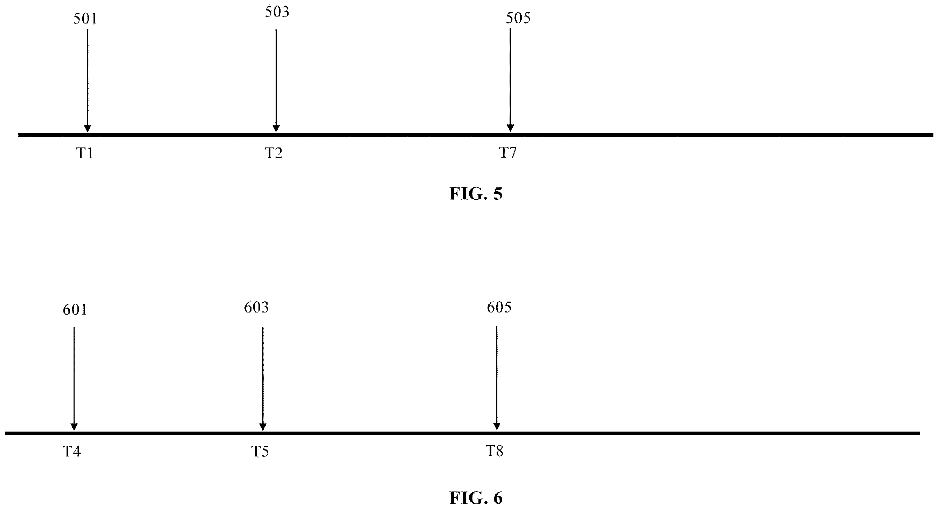

In one embodiment, one of the one or more reports includes a time metric indicating an elapsed time between satisfaction of the one or more first conditions for execution of the CHO command and detection of a source link failure between the UE 101 and the base station 105, as shown in FIG. 5.

As shown in FIG. 5, at time instance 501 (timestamp T1), the UE 101 receives configuration for simultaneous execution of the CHO and CPAC commands.

At time instance 503 (timestamp T2), the one or more first conditions are satisfied for execution of the CHO command.

At time instance 505 (timestamp T7), the source link failure between the UE 101 and the base station 105 is detected.

In an embodiment, the source link failure may be detected using the techniques known to a person skilled in the art. In an embodiment, the source link refers to a link (e.g. a communication link) between a source cell and the UE 101. The source cell refers to the cell with which the UE 101 is connected before the execution of the CHO and CPAC commands. The source link failure may include a radio link failure, a MCG link failure, and a SCG link failure. In an embodiment, the radio link failure may occur when radio connection between the UE 101 and the base station 105 is lost. The MCG link failure is detected when the radio link failure is detected for the MCG. Similarly, the SCG link failure is detected when the radio link failure is detected for the SCG. Accordingly, the elapsed time may be calculated based on the difference between timestamps T7 and T2, i.e., elapsed time = T7-T2....(3)

This time metric may help the base station 105 to reduce time-to-trigger (TTT), i.e., time to trigger the CPAC configuration or optimize the one or more second conditions so that the one or more second conditions may be satisfied before the source link failure happens. In an embodiment, the base station 105 may optimize the one or more second conditions or reduce the TTT in accordance with techniques known to a person skilled in the art.

In one embodiment, one of the one or more reports includes a time metric indicating an elapsed time between satisfaction of the one or more second conditions for execution of the CPAC command and detection of the source link failure between the UE 101 and the base station 105, as shown in FIG. 6.

As shown in FIG. 6, at time instance 601 (timestamp T4), the UE 101 receives configuration for simultaneous execution of the CHO and CPAC commands.

At time instance 603 (timestamp T5), the one or more second conditions are satisfied for execution of the CPAC command.

At time instance 605 (timestamp T8), the source link failure between the UE 101 and the base station 105 is detected.

Accordingly, the elapsed time may be calculated based on the difference between timestamps T8 and T5, i.e.,

$$\text{elapsed time} = T8-T5....(4)$$

This time metric may help the base station 105 to reduce time-to-trigger (TTT), i.e., time to trigger the CHO configuration or optimize the one or more first conditions so that the one or more first conditions may be satisfied before the source link failure happens. In an embodiment, the base station 105 may optimize the one or more first conditions or reduce the TTT in accordance with techniques known to a person skilled in the art.

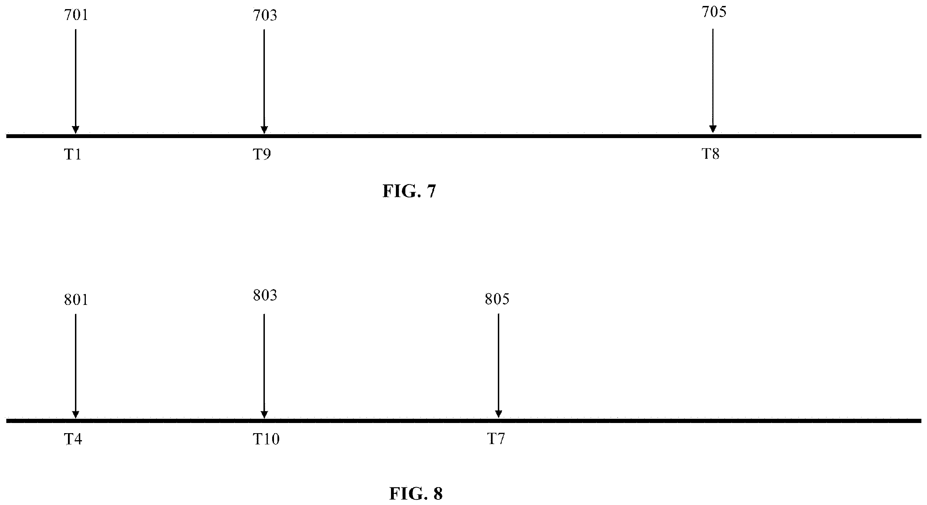

In one embodiment, one of the one or more reports includes a time metric indicating an elapsed time between the start of a CHO time-to-trigger (TTT) event and detection of the source link failure between the UE 101 and the base station 105, as shown in FIG. 7.

As shown in FIG. 7, at time instance 701 (timestamp T1), the UE 101 receives configuration for simultaneous execution of the CHO and CPAC commands.

At time instance 703 (timestamp T9), the CHO time-to-trigger TTT event starts. In an embodiment, the CHO TTT is a time period during which the one or more first conditions need to remain satisfied (e.g. remain met). Accordingly, the one or more first conditions are considered satisfied upon expiry of the CHO TTT event (e.g. in response to the one or more first conditions being met for the duration of the CHO TTT time period). The CHO time-to-trigger TTT event may start in response to the one or more first conditions being met.

At time instance 705 (timestamp T8), while the CHO TTT is running, the source link failure between the UE 101 and the base station 105 is detected. Accordingly, the evaluation of the conditional reconfiguration is stopped. In an embodiment, the source link failure may be detected using the techniques known to a person skilled in the art. Accordingly, the elapsed time may be calculated based on the difference between timestamps T8 and T9, i.e.,

$$\text{elapsed time} = T8-T9....(5)$$

This time metric may help the base station 105 to reduce the CHO TTT in accordance with techniques known to a person skilled in the art.

In one embodiment, one of the one or more reports includes a time metric indicating an elapsed time between the start of a CPAC time-to-trigger (TTT) event and detection of the source link failure between the UE 101 and the base station 105, as shown in FIG. 8.

As shown in FIG. 8, at time instance 801 (timestamp T4), the UE 101 receives configuration for simultaneous execution of the CHO and CPAC commands.

At time instance 803 (timestamp T10), CPAC TTT event starts. In an embodiment, the CPAC TTT is a time period during which the one or more second conditions need to remain satisfied (e.g. remain met). Accordingly, the one or more second conditions are considered satisfied upon expiry of the CPAC TTT event (e.g. in response to the one or more second conditions being met for the duration of the CPAC TTT time period). The CPAC time-to-trigger TTT event may start in response to the one or more second conditions being met.

At time instance 805 (timestamp T7), the source link failure between the UE 101 and the base station 105 is detected. Accordingly, the evaluation of the conditional reconfiguration is stopped. In an embodiment, the source link failure may be detected using the techniques known to a person skilled in the art. Accordingly, the elapsed time may be calculated based on the difference between timestamps T7 and T10, i.e., elapsed time=T7-T10....(6)

This time metric may help the base station 105 to reduce the CPAC TTT in accordance with techniques known to a person skilled in the art.

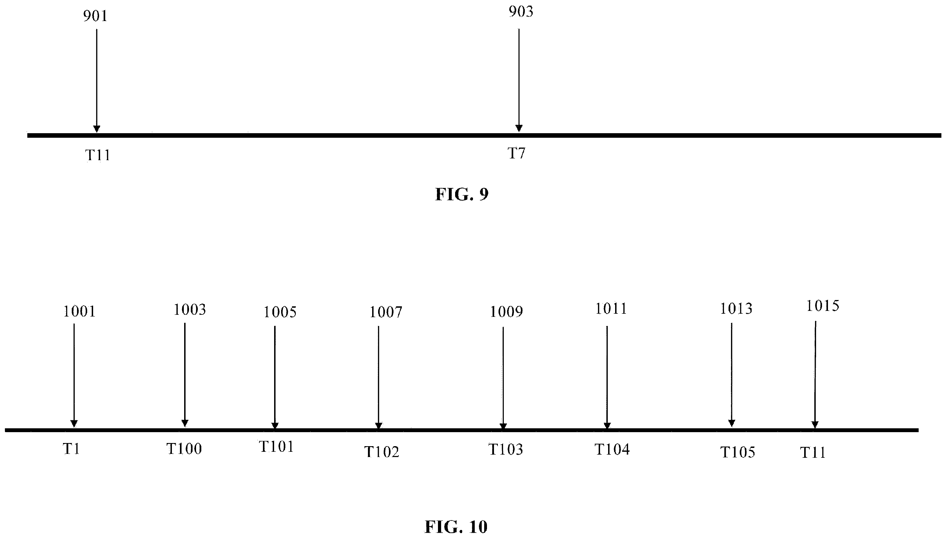

In one embodiment, one of the one or more reports includes a time metric indicating an elapsed time between successful simultaneous execution of the CHO and the CPAC command and detection of a target link failure between the UE 101 and the base station 105, as shown in FIG. 9.

As shown in FIG. 9, at time instance 901 (timestamp T11), the UE 101 successfully simultaneously executes the CHO and CPAC commands.

At time instance 903 (timestamp T7), the target link failure between the UE 101 and the base station 105 is detected.

As the CHO and CPAC commands have been executed successfully, the UE 101 is now connected to a target cell. In an embodiment, the target link refers to a link (e.g. a communication link) between a target cell and the UE 101. The target cell refers to the cell with which the UE 101 is connected after the successful execution of the CHO and CPAC commands. In an embodiment, the target link failure may be detected using the techniques known to a person skilled in the art. Accordingly, the elapsed time may be calculated based on the difference between timestamps T7 and T11, i.e.,

$$elapsed\ time=T7\text{-}T11\ldots\text{.}(7)$$

This time metric may help the base station 105 to optimize the one or more first and second conditions in accordance with techniques known to a person skilled in the art

In one embodiment, one of the one or more reports includes evaluation states of the one or more first conditions and the one or more second conditions recorded before the successful simultaneous execution of the CHO command and the CPAC command, as shown in FIG. 10. Each evaluation state indicates the success or failure of a respective first or second condition.

As shown in FIG. 10, at time instance 1001 (timestamp T1), the UE 101 receives configuration for simultaneous execution of the CHO and CPAC commands.

At time instance 1015 (timestamp T11), the CHO and CPAC commands are successfully executed simultaneously.

In an embodiment, the evaluation states may be recorded for a predefined number of times before successful simultaneous execution of the CHO command and the CPAC command. For example, as shown in FIG. 10, the evaluation states may be recorded for 6 times, i.e.,

between time instance 1003 to time instance 1013.

In an embodiment, the predefined number of times may be configured by the UE 101 or the base station 105. In an embodiment, the report also includes the evaluation states of the one or more first conditions and the one or more second conditions along with timestamps corresponding to the time of recording the corresponding evaluation states. For example, at 1003, the report may include CHO ExecConditionpassed, at timestamp T100.

At time instance 1005 (timestamp T101), the report may include CHO ExecConditionfailed. At time instance 1007 (timestamp T102), the report may include CPAC ExecConditionpassed. At time instance 1009 (timestamp T103), the report may include CPAC ExecConditionfailed. At time instance 1011 (timestamp T104), the report may include CHO ExecConditionpassed. At time instance 1013 (timestamp T105), the report may include CPAC ExecConditionpassed. As both the first and second conditions have been passed, the CHO and CPAC commands are successfully executed at time instance 1015 (timestamp T11). It should be noted that CHO ExecCondition refers to the first condition and CPAC ExecCondition refers to an example of the second condition. CHO ExecConditionpassed refers to the first condition being satisfied. CHO ExecConditionfailed refers to the first condition being failed (e.g. be detected as not met or satisfied). CPAC ExecConditionpassed refers to the second condition being satisfied. CPAC ExecConditionfailed refers to the second condition being failed (e.g. be detected as not met or satisfied).

This metric may help the base station 105 to optimize the one or more first and second conditions in accordance with techniques known to a person skilled in the art.

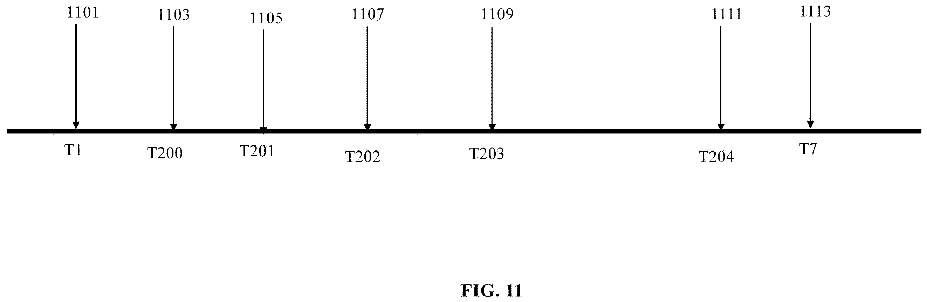

In one embodiment, one of the one or more reports includes evaluation states of the one or more first conditions and the one or more second conditions recorded before detection of the source link failure between the UE 101 and the base station 105, as shown in FIG. 11. The evaluation state indicates the success or failure of a respective first or second condition.

As shown in FIG. 11, at time instance 1101 (timestamp T1), the UE 101 receives configuration for simultaneous execution of the CHO and CPAC commands.

At time instance 1113 (timestamp T7), the source link failure is detected. In an embodiment, the evaluation states may be recorded for the predefined number of times before the detection of the source link failure between the UE 101 and the base station 105. For example, as shown in FIG. 11, the evaluation states may be recorded for 5 times, i.e., between time instance 1103 to time instance 1111. In an embodiment, the predefined number of times may be configured by the UE 101 or the base station 105. In an embodiment, the report also includes the evaluation states of the one or more first conditions and the one or more second conditions along with timestamps corresponding to the time of recording the corresponding evaluation states.

For example, at time instance 1103 (timestamp T200), the report may include CHO ExecConditionpassed. At time instance 1105 (timestamp T201), the report may include CHO ExecConditionfailed. At time instance 1107 (timestamp T202), the report may include CPAC ExecConditionpassed. At time instance 1109 (timestamp T203), the report may include CPAC Exec-Conditionfailed. At time instance 1111 (timestamp T204), the report may include CHO ExecConditionpassed. At time instance 1113, the source link failure has been detected. It should be noted that CHO ExecCondition refers to the first condition and CPAC ExecCondition refers to the second condition.

This metric may help the base station 105 to optimize the one or more first and second conditions in accordance with techniques known to a person skilled in the art.

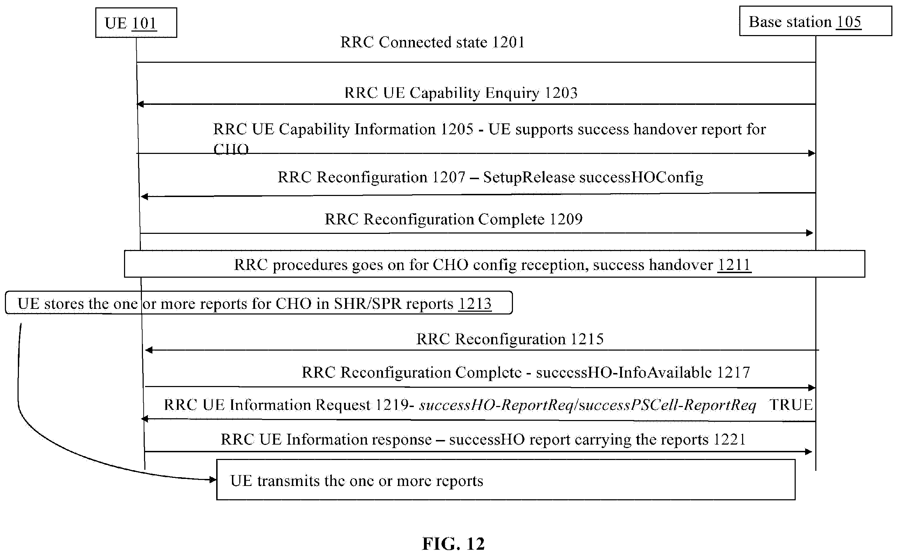

In an embodiment, the UE 101 may transmit the one or more reports as explained above with reference to FIGS. 1-11 to the base station 105 during an operation, such as handover, between the UE 101 and the base station 105. Such examples are discussed in the following FIGS. 12-13. FIG. 12 illustrates a signal flow diagram depicting a successful conditional handover, in accordance with an embodiment of the disclosure.

As shown in FIG. 12, at operation 1201, the UE 101 and the base station 105 are in a Radio Resource Control (RRC) Connected state.

At operation 1203, the base station 105 sends a RRC UE Capability Enquiry to the UE 101.

At operation 1205, the UE 101 sends a RRC UE Capability Information in which the UE 101 informs the base station 105 that it supports success handover report for CHO and CPAC.

At operation 1207, the base station 105 sends a RRC Reconfiguration message to the UE 101 which includes setup of successHOConfig.

At operation 1209, the UE 101 sends a RRC Reconfiguration Complete message to the base station 105.

At operation 1211, RRC procedures goes on for simultaneous CHO and CPAC configuration reception and handover is successful.

At operation 1213, the UE 101 stores the one or more reports for CHO in the SHR/SPR reports, as discussed with respect to FIG. 2.

At operation 1215, the base station 105 sends a RRC Reconfiguration message to the UE 101.

At operation 1217, the UE 101 sends a RRC Reconfiguration Complete message to the base station 105, which includes successHO-InfoAvailable. successHO-InfoAvailable may indicate successful handover and that information regarding the handover is available.

At operation 1219, the base station 105 sends a RRC UE Information Request to the UE 101, which includes successHO-ReportReq/successPSCell-ReportReq as TRUE. successHO-ReportReq may request information about the successful handover. successPSCell-ReportReq may request information about the successful PSCell change or addition. That is, the base station 105 requests one or more reports, as discussed with respect to FIG. 2.

At operation 1221, the UE 101 sends RRC UE Information response including the one or more reports, as discussed with respect to FIG. 2.

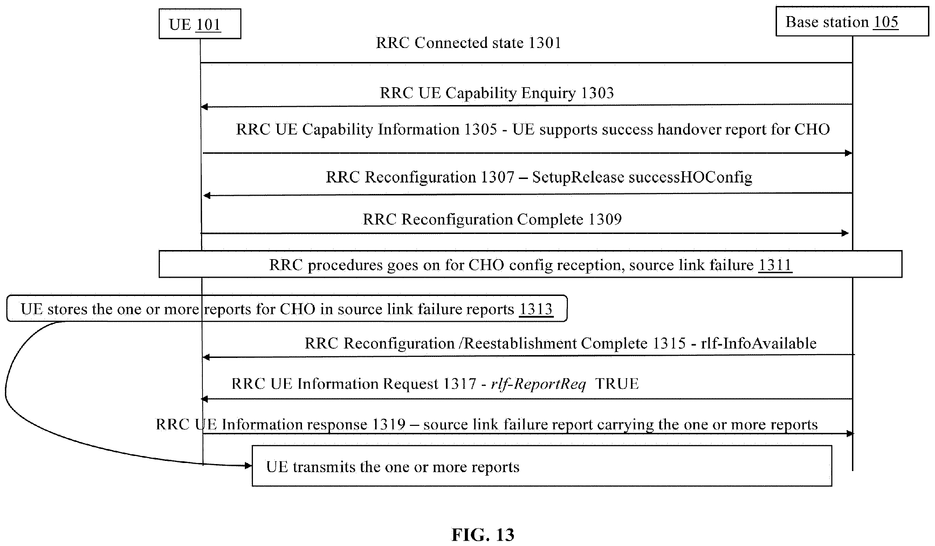

FIG. 13 illustrates a signal flow diagram depicting a source link failure between the UE and the base station, in accordance with an embodiment of the disclosure. As shown in FIG. 13, operations 1301-1309 are similar to operations 1201-1209 of FIG. 12. Hence, the description of the same is not repeated here for the sake of brevity of the description.

At operation 1311, RRC procedures goes on for simultaneous CHO and CPAC configuration reception and a source link failure is detected.

At operation 1313, the UE 101 stores the one or more reports for CHO in source link failure reports, as discussed with respect to FIG. 2.

At operation 1315, the base station 105 sends RRC Reconfiguration /Reestablishment Complete message including rlf-InfoAvailable, to the UE 101. rlf-InfoAvailable may indicate that radio link information is available.

At operation 1317, the base station 105 sends RRC UE Information Request to the UE 101, which includes rlf-ReportReq as TRUE. rlf-ReportReq may request information about the radio link failure (e.g. the one or more reports, as discussed with respect to FIG. 2).

At operation 1319, the UE 101 sends RRC UE Information response including the one or more reports, as discussed with respect to FIG. 2.

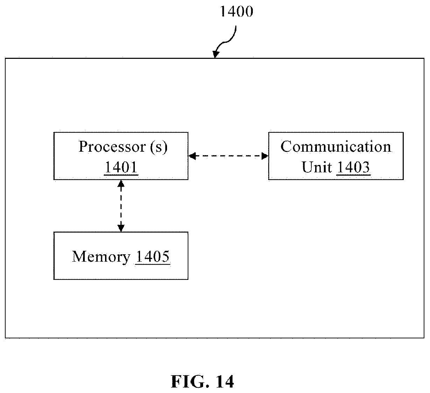

FIG. 14 illustrates a block diagram of a system for simultaneous conditional reconfiguration of the PCell and the PSCell for the UE, in accordance with an embodiment of the disclosure.

The configuration of FIG. 14 may be understood as a part of the configuration of the UE 101. Further, the method 200 as disclosed above may be implemented in the system 1400 according to a further embodiment. Non-limiting examples of the system 1400 are an electronic device, a mobile device, a user equipment, a base station, or a radio station.

In an embodiment, the system 1400 corresponds to the UE 101. Referring to FIG. 14, the system 1400 may include "processor(s)" which is at least one processor 1401, a communication circuit 1403 (e.g., communicator or communication interface), and a memory 1405.

As an example, the at least one processor 1401 may be a single processor or a number of processors, all of which could include multiple computing circuits. The processor 1401 may be implemented as one or more microprocessors, microcomputers, microcontrollers, digital signal processors, central processing units, state machines, logic circuitries, and/or any devices that manipulate signals based on operational instructions. Among other capabilities, the processor 1401 is configured to fetch and execute computer-readable instructions and data stored in the memory 1405. The processor 1401 may include one or a plurality of processors. At this time, one or a plurality of processors 1402 may be a general-purpose processor, such as a Central Processing Unit (CPU), an Application Processor (AP), or the like, a graphics-only processing unit such as a Graphics Processing Unit (GPU), a Visual Processing Unit (VPU), and/or an AI-dedicated processor such as a Neural Processing Unit (NPU). The one or a plurality of processors 1402 may control the processing of the input data in accordance with a predefined operating rule or Artificial Intelligence (AI) model stored in the non-volatile memory and the volatile memory, i.e., the memory 1405. The predefined operating rule or AI model is provided through training or learning.

The communication circuit 1403 may perform functions for transmitting and receiving signals via a wireless channel. In an embodiment, the communication circuit 1403 may receive the RRC reconfiguration message from the base station 105, in accordance with techniques disclosed in the disclosure. In a further embodiment, the communication circuit 1403 may also transmit the one or more reports to the base station 105, in accordance with techniques disclosed in the disclosure. In another embodiment, the at least one processor 1401 may perform operations 201 and 205 of FIG.2 via the communication circuit 1403.

The memory 1405 may include any non-transitory computer-readable medium known in the art including, for example, volatile memory, such as Static Random Access Memory (SRAM) and Dynamic Random Access Memory (DRAM), and/or non-volatile memory, such as Read-Only Memory (ROM), erasable programmable ROM, flash memories, hard disks, optical disks, and magnetic tapes. The memory 1405 may also store the one or more reports in accordance with techniques disclosed in the disclosure.

Embodiments are examples of particular implementations, and the system 1400 may include additional components required to implement the desired functionality of the system 1400 in accordance with the requirements of the disclosure.

Accordingly, the disclosure provides techniques for improving simultaneous conditional reconfiguration of the PCell and the PSCell based on feedback reports from the UE 101.

Accordingly, the disclosure provides various advantages. For example, the disclosure provides techniques to optimize the trigger conditions of CHO and CPAC reconfigurations, i.e., one or more first and second conditions. Accordingly, the disclosure provides techniques to optimize the simultaneous conditional reconfiguration of PCell and the PSCell.

Unless otherwise defined, all technical and scientific terms used herein have the same meaning as commonly understood by one of ordinary skilled in the art to which this disclosure belongs. The system, methods, and examples provided herein are illustrative only and not intended to be limiting.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

**Claims**

1.  A method for optimizing simultaneous conditional reconfiguration of a primary cell, PCell, and a primary secondary cell, PSCell, for a user equipment, UE, the method comprising:

    receiving, from a base station, a radio resource control, RRC, reconfiguration message comprising a conditional handover, CHO, command and a conditional PSCell addition or change, CPAC, command for performing a reconfiguration of the PCell and a reconfiguration of the PSCell, simultaneously,

    wherein the CHO command comprises one or more first conditions to trigger the reconfiguration of the PCell, and wherein the CPAC command comprises one or more second conditions to trigger the reconfiguration of the PSCell;

    storing one or more reports capturing one or more metrics related to the simultaneous conditional reconfiguration of the PCell and the PSCell upon receiving the RRC reconfiguration message; and transmitting, to the base station, the one or more reports for optimizing the one or more first conditions and the one or more second conditions.

2. The method of claim 1, wherein one of the one or more reports comprises a time metric indicating an elapsed time between satisfaction of the one or more first conditions for execution of the CHO command and satisfaction of the one or more second conditions for execution of the CPAC command, and wherein the method further comprises simultaneously executing the CHO command and the CPAC command.

3. The method of claim 1 or claim 2, wherein one of the one or more reports comprises at least one of:

a time metric indicating an elapsed time between satisfaction of the one or more second conditions for execution of the CPAC command and satisfaction of the one or more first conditions for execution of the CHO command;
a time metric indicating an elapsed time between satisfaction of the one or more second conditions for execution of the CPAC command and detection of a source link failure between the UE and the base station;
a time metric indicating an elapsed time between successful simultaneous execution of the CHO and the CPAC command and detection of a target link failure between the UE and the base station;
a time metric indicating an elapsed time between a start of a CHO time-to-trigger, TTT, event and detection of a source link failure between the UE and the base station; or
a time metric indicating an elapsed time between a start of a CPAC time-to-trigger, TTT, event and detection of a source link failure between the UE and the base station.

4. The method of any preceding claim, wherein one of the one or more reports comprises evaluation states of the one or more first conditions and the one or more second conditions recorded before successful simultaneous execution of the CHO command and the CPAC command.

5. The method of claim 4, wherein the evaluation states are recorded for a predefined number of times before successful simultaneous execution of the CHO command and the CPAC command.

6. The method of claim 4 or claim 5, wherein the report comprises the evaluation states of the one or more first conditions and the one or more second conditions along with timestamps corresponding to a time of recording corresponding evaluation states.

7. The method of any of claims 1-3, wherein one of the one or more reports comprises evaluation states of the one or more first conditions and the one or more second conditions recorded before detection of a source link failure between the UE and the base station.

8. The method of claim 7, wherein the evaluation states are recorded for a predefined number of times before detection of the source link failure between the UE and the base station.

9. The method of claim 7 or claim 8, wherein the report comprises the evaluation states of the one or more first conditions and the one or more second conditions along with timestamps corresponding to a time of recording corresponding evaluation states.

10. An electronic device for optimizing simultaneous conditional reconfiguration of a primary cell, PCell, and a primary secondary cell, PSCell, for a user equipment, UE, the electronic device comprising:

a memory; and
a processor operatively coupled to the memory and configured to:

receive, from a base station, a radio resource control, RRC, reconfiguration message having a conditional handover, CHO, command and a conditional PSCell addition or change, CPAC, command for performing a reconfiguration of the PCell and a reconfiguration of the PSCell, simultaneously,

wherein the CHO command comprises one or more first conditions to trigger the reconfiguration of the PCell, and wherein the CPAC command comprises one or more second conditions to trigger the reconfiguration of the PSCell;

store one or more reports capturing one or more metrics related to the simultaneous conditional reconfiguration of the PCell and the PSCell upon receiving the RRC reconfiguration message; and
transmit, to the base station, the one or more reports for optimizing the one or more first conditions and the one or more second conditions.

11. The electronic device of claim 10, wherein one of the one or more reports a time metric indicating an elapsed time between satisfaction of the one or more first conditions for execution of the CHO command and satisfaction of the one or more second conditions for execution of the CPAC command, and wherein the processor is further configured to simultaneously execute the CHO command and the CPAC command.

12. The electronic device of claim 10 or claim 11, wherein one of the one or more reports comprises a time metric indicating an elapsed time between satisfaction of the one or more second conditions for execution of the CPAC command and satisfaction of the one or more first conditions for execution of the CHO command, and
wherein the processor is further configured to simultaneously execute the CHO command and the CPAC command.

13. The electronic device of any of claims 10-12, wherein one of the one or more reports includes at least one of:

a time metric indicating an elapsed time between satisfaction of the one or more first conditions for execution of the CHO command and detection of a source link failure between the UE and the base station;
a time metric indicating the elapsed time between satisfaction of the one or more second conditions for execution of the CPAC command and detection of a source link failure between the UE and the base station;
a time metric indicating the elapsed time between successful simultaneous execution of the CHO and the CPAC command and detection of a target link failure between the UE and the base station;
a time metric indicating the elapsed time between a start of a CHO time-to-trigger, TTT, event and detection of a source link failure between the UE and the base station; or
a time metric indicating the elapsed time between a start of a CPAC time-to-trigger, TTT, event and detection of a source link failure between the UE and the base station.

14. The electronic device of any of claims 10-13, wherein one of the one or more reports comprises evaluation states of the one or more first conditions and the one or more second conditions recorded before successful simultaneous execution of the CHO command and the CPAC command,

wherein the evaluation states are recorded for a predefined number of times before successful simultaneous execution of the CHO command and the CPAC command, and
wherein the report comprises the evaluation states of the one or more first conditions and the one or more second conditions along with timestamps corresponding to a time of recording corresponding evaluation states.

15. The electronic device of any of claims 10-13, wherein one of the one or more reports comprises evaluation states of the one or more first conditions and the one or more second conditions recorded before detection of a source link failure between the UE and the base station,

wherein the evaluation states are recorded for a predefined number of times before detection of the source link failure between the UE and the base station, and
wherein the report comprises the evaluation states of the one or more first conditions and the one or more second conditions along with timestamps corresponding to a time of recording corresponding evaluation states.

FIG. 1

receiving, from a base station, an RRC reconfiguration message having a conditional handover (CHO) command and a conditional PSCell addition or change (CPAC) command for simultaneous reconfiguration of the PCell and the PSCell, wherein the CHO command comprises one or more first conditions to trigger the reconfiguration of the Pcell and the CPAC command comprises one or more second conditions to trigger the reconfiguration of the PSCell — 201

storing one or more reports capturing one or more metrics related to simultaneous conditional reconfiguration of the PCell and the PSCell upon receiving the RRC reconfiguration message — 203

transmitting the one or more reports to the base station for optimizing the one or more first conditions and the one or more second conditions — 205

**FIG. 2**

301          303          305

T1           T2           T3

**FIG. 3**

401          403          405

T4           T5           T6

**FIG. 4**

501                    503                    505

T1                     T2                     T7

**FIG. 5**

601                    603                    605

T4                     T5                     T8

**FIG. 6**

701  703  705

T1  T9  T8

**FIG. 7**

EP 4 503 708 A1

801  803  805

T4  T10  T7

**FIG. 8**

EP 4 503 708 A1

901 903

T11 T7

**FIG. 9**

1001 1003 1005 1007 1009 1011 1013 1015

T1 T100 T101 T102 T103 T104 T105 T11

**FIG. 10**

1101 1103 1105 1107 1109 1111 1113

T1 T200 T201 T202 T203 T204 T7

**FIG. 11**

Base station 105

UE 101

RRC Connected state 1201

RRC UE Capability Enquiry 1203

RRC UE Capability Information 1205 - UE supports success handover report for CHO

RRC Reconfiguration 1207 – SetupRelease successHOConfig

RRC Reconfiguration Complete 1209

RRC procedures goes on for CHO config reception, success handover 1211

UE stores the one or more reports for CHO in SHR/SPR reports 1213

RRC Reconfiguration 1215

RRC Reconfiguration Complete - successHO-InfoAvailable 1217

RRC UE Information Request 1219- *successHO-ReportReq/successPSCell-ReportReq* TRUE

RRC UE Information response – successHO report carrying the reports 1221

UE transmits the one or more reports

**FIG. 12**

UE 101 | Base station 105

RRC Connected state 1301

RRC UE Capability Enquiry 1303

RRC UE Capability Information 1305 - UE supports success handover report for CHO

RRC Reconfiguration 1307 – SetupRelease successHOConfig

RRC Reconfiguration Complete 1309

RRC procedures goes on for CHO config reception, source link failure 1311

UE stores the one or more reports for CHO in source link failure reports 1313

RRC Reconfiguration /Reestablishment Complete 1315 - rlf-InfoAvailable

RRC UE Information Request 1317 - *rlf-ReportReq* TRUE

RRC UE Information response 1319 – source link failure report carrying the one or more reports

UE transmits the one or more reports

**FIG. 13**

1400

```
┌─────────────────────────────────────────────────────┐
│                                                     │
│                                                     │
│   ┌──────────────────┐        ┌──────────────────┐  │
│   │   Processor (s)  │<- - - ->│  Communication   │  │
│   │      1401        │        │   Unit 1403      │  │
│   └──────────────────┘        └──────────────────┘  │
│            ʌ                                         │
│            │                                         │
│            v                                         │
│   ┌──────────────────┐                              │
│   │  Memory 1405     │                              │
│   └──────────────────┘                              │
│                                                     │
└─────────────────────────────────────────────────────┘
```

**FIG. 14**

Europäisches
Patentamt

European
Patent Office

Office européen
des brevets

# EUROPEAN SEARCH REPORT

Application Number

EP 24 19 1771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/007550 A1 (KUMAR RAJEEV [US] ET AL) 5 January 2023 (2023-01-05) * paragraphs [0093] - [0096], [0100], [0104], [0112], [0113], [0144]; figure 3 * ----- | 1-15 | INV. H04W24/02 H04W24/10 H04W36/36 |
| A | US 2023/097891 A1 (ZHANG MENGJIE [CN] ET AL) 30 March 2023 (2023-03-30) * paragraph [0158] * ----- | 1-15 | |
| A | NINGYU CHEN ET AL: "SON MDT enhancement for MR-DC CPAC", 3GPP DRAFT; R2-2305780; TYPE DISCUSSION; NR_ENDC_SON_MDT_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Incheon, KR; 20230522 - 20230526 12 May 2023 (2023-05-12), XP052314999, Retrieved from the Internet: URL:https://www.3gpp.org/ftp/TSG_RAN/WG2_RL2/TSGR2_122/Docs/R2-2305780.zip R2-2305780_SON MDT enhancement for MR-DC CPAC.doc [retrieved on 2023-05-12] * Sections 2 and 3 * ----- | 1-15 | **TECHNICAL FIELDS SEARCHED (IPC)** H04W |

-/--

The present search report has been drawn up for all claims

| Place of search | Date of completion of the search | Examiner |
|---|---|---|
| Munich | 9 December 2024 | Aguiar, Jorge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                          

& : member of the same patent family, corresponding document

EPO FORM 1503 03.82 (P04C01)

Europäisches Patentamt
European Patent Office
Office européen des brevets

**EUROPEAN SEARCH REPORT**

Application Number

EP 24 19 1771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ABY KANNEATH ABRAHAM ET AL: "MRO enhancements for Rel-18 mobility features", 3GPP DRAFT; R2-2405150; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka City, Fukuoka, JP; 20240520 - 20240524 10 May 2024 (2024-05-10), XP052607579, Retrieved from the Internet: URL:https://www.3gpp.org/ftp/TSG_RAN/WG2_RL2/TSGR2_126/Docs/R2-2405150.zip R2-2405150 MRO Enhancements.docx [retrieved on 2024-05-10] * Section 2 * | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 9 December 2024 | Aguiar, Jorge |

EPO FORM 1503 03.82 (P04C01)

**ANNEX TO THE EUROPEAN SEARCH REPORT
ON EUROPEAN PATENT APPLICATION NO.**

EP 24 19 1771

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | Publication date | Patent family member(s) | | Publication date |
|---|---|---|---|---|
| US 2023007550 A1 | 05-01-2023 | CN | 117561744 A | 13-02-2024 |
| | | EP | 4364462 A1 | 08-05-2024 |
| | | US | 2023007550 A1 | 05-01-2023 |
| | | WO | 2023278156 A1 | 05-01-2023 |
| US 2023097891 A1 | 30-03-2023 | CN | 115398968 A | 25-11-2022 |
| | | EP | 4118874 A1 | 18-01-2023 |
| | | US | 2023097891 A1 | 30-03-2023 |
| | | WO | 2021109394 A1 | 10-06-2021 |

EPO FORM P0459

For more details about this annex : see Official Journal of the European Patent Office, No. 12/82